# EUROPEAN PATENT SPECIFICATION

(11) **EP 4 031 935 B1**
(45) Date of publication and mention of the grant of the patent: **12.06.2024**
(21) Application number: 20775243.7
(22) Date of filing: 16.09.2020
(51) Int. Cl.: G02F 1/1333, G02F 1/13357, B03B 9/06, H01J 9/52, B02C 19/00, B02C 21/00, B02C 25/00, B09B 3/00

(54) **RECYCLING OF FLAT PANEL DISPLAYS**
RECYCLING VON FLACHBILDSCHIRMEN
RECYCLAGE DES ÉCRANS PLATS

(30) Priority: 17.09.2019 GB 201913406
(43) Date of publication of application: 27.07.2022
(60) Divisional application: 24155397.3
(73) Proprietor: Peregrine Technologies (Holdings) Limited, Cork, T23 KH58 (IE)
(72) Inventor: MIDDLETON, Arthur, Eustace Co. Kildare W91 V1F6 (IE); SHEEHAN, Brian, Mullingar Co. Westmeath N91 H725 (IE); MC LOUGHLIN, Cian, Mullingar Co. Westmeath N91 H725 (IE)
(74) Representative: CSY London
(86) International application number: PCT/EP2020/075879
(87) International publication number: WO 2021/053022

(56) References cited:
- DE-A1-102009 020 751
- US-A1- 2011 263 175
- US-A1- 2014 283 660

## Description

The present invention concerns the field of waste recycling, especially recycling of electrical and electronic goods. The invention relates in particular to the processing of devices which include flat panel displays (FPDs) such as televisions, public information screens and signs, advertising panels, computer monitors and lap-tops, tablets and computers with integrated flat panel displays.

Such FPDs have displaced cathode ray tube (CRT) displays and now form a significant waste stream in domestic and commercial waste. Several types of FPD are known. For example, there are simple liquid crystal displays (LCDs), backlit LCDs (with LED backlighting), plasma screens, organic light-emitting diode (OLED) screens, amongst others. With improvements in the technology screens rapidly become obsolete as colour rendition and screen resolution improve, and imaging codecs change. Thus, more FPDs enter the waste stream as technology improves.

With such a change in global FPD markets the traditional methods of disposal (such as simple shredding) create environmental and economic challenges. With a declining CRT market and a growing FPD market (400 million per year) a different approach to recycling is required. There is WHO legislation on the exposure of individuals to hazardous materials such as those contained within the FPD. These levels are specified on a per county basis under the health and safety and welfare legislation. With this understood, high throughput methods of processing FPDs is a requirement. Various companies exist in the market such as Blue box, Erdwich, ALR and MRT that provide different solutions for shredding and or cutting of FPDs.

Regulatory initiatives such as the European Commission's WEEE Directive (2012/19/EU) have directed that landfill dumping of electronic goods (including TV sets) be strictly limited, and recycling and repair encouraged. Manufacturers are obliged to finance a proportion of the collection, treatment and recovery costs of end-of-life electrical goods, including those which incorporate FPDs, based upon market share of the relevant class of goods. Special provisions exist for screens and monitors having an area of greater than 100 cm², including use of best practice in treatment and disposal of hazardous material, and reporting weight of products processed. Provisions which require cycling and treatment of electrical waste exist or are being developed in many other regions or countries worldwide, including states in Australia, Asia and the US.

US2005/0159068 discloses a method of recycling flat panel displays, in particular to permit re-use of the glass by removing lead-containing components. The display panels include two glass plates, which are separated by cutting, dissolving or melting the frit glass that joins them. This method clearly relates to plasma screens, as only these have the requisite lead content.

WO2011/073966 discloses a process for removing hazardous material from LCD displays backlit by cold cathode fluorescent tubes (CCFTs) and, in particular, separating the mercury contained in such tubes. This method involves cutting through the front of the housing which provides a border around the viewing screen. This is said to permit removal of the entire LCD panel and access to the tubes behind. These glass tubes are crushed to liberate the mercury-containing fluorescent gas, which is sucked into a collection device. The LCD screen cutting takes place indirectly, through the frame which defines the border of the housing, and then into the edge region of the LCD screen panel. This process is essentially manual insofar as the housing cutting is concerned and the tube crushing step is concerned. The process is also limited to use for LCD TVs backlit by CCFL tubes.

US 2014/283660 A1 discloses an apparatus and method for cutting out a flat display device comprising an exposed display panel and a frame with a view of recycling components thereof. The screen type is identified before the cutting step through optically reading e.g. a bar code. A data base allows to determine a cutting distance from a reference line such that a cut out of the frame may be implemented without the risk of cutting the display panel.

US 2011/263175 A1 discloses an apparatus and method for safe dismantling of flat-screen TVs. The apparatus incorporates an evacuation system to prevent operator exposure to mercury, enhancing the safety of flat-screen TV dismantling.

DE 10 2009 020751 A1 discloses a method for disassembling LCD screens, such as monitors, that includes using a separation tool to detach the fixed front side of the LCD screen and utilizing a vacuum exhauster to remove the exposed backlight of the LCD screen.

There is a need for a process and apparatus for disassembling FPD units to remove hazardous or valuable elements and which can be used for LCD, LED, OLED or plasma screen FPDs. There is a need for a process which may be automated so as to adapt to tailor the process for specific types and/or models of FPD without the need for operator input.

The present invention seeks to address one or more of the aforementioned problems with prior art processes and to provide a more efficient processing of end-of-life flat panel display units.

According to one aspect of the present invention there is provided an apparatus for the disassembly of flat panel display units which each flat panel display unit, FPD, comprises a display screen provided on the front face of the FPD and a housing which accommodates the screen and associated electronic circuitry, the apparatus comprising: (i) a cutting station for receiving an end-of-life FPD, the cutting station being configured and arranged to make cuts into the FPD along cutting paths which permit detachment of the entire display screen, or a cut-out sub-unit of the display screen, from the FPD, (ii) an FPD characterisation station provided in advance of, or at, the cutting station, the characterisation station being adapted to measure and/or log one or more characterising parameters or identifiers of the FPD in advance of the cutting step, (iii) a data processing system in data communication with the FPD characterisation station, the data processing system being adapted to receive and one or more of said parameters or identifiers, and derive therefrom an appropriate protocol for cutting the FPD display screen, and provide instructions in accordance with the protocol which are sent back to the cutting station so as to control the cuts, and the characterisation station comprises a weigh station adapted to weigh the FPD so as to obtain a measured weight value for the FPD, which value serves as one characterising parameter.

The weight value may be sent to the data processing system, the measured FPD weight value being compared with an associated FPD database which comprises known FPD weights so as to obtain one or more candidate FPD matches based upon identical weight, or closest weight, thereby determining the appropriate cutting protocol for the screen cutting.

The FPD database may be pre-loaded with cutting path instructions for a range of known FPDs and the FPD database may further comprise one or more stored characterising parameters or identifiers of each of the known FPDs. The data processing system may be adapted to compare one or more characterisation parameter or identifier obtained from the characterisation station for a characterised FPD with one or more counterpart characterisation parameter or identifier stored in the database. This may permit identification of a matching stored FPD, or in the absence of this a null result.

In the event of a match, the data processing may retrieve the appropriate protocol for cutting that FPD display screen, and send instructions in accordance with the protocol to the cutting station.

The FPD characterisation station may comprise an optical scanner, and preferably a 3-D scanner. The optical scanner may be adapted to measure one or more dimensional variable of the FPD. The dimensional variable typically comprises one or more of: FPD housing width and/or length and/or diagonal extent, visible display screen width and/or length, and/or diagonal extent.

The dimensional variable or variables may be compared to corresponding known FPD dimension variables provided in the database, so as to permit matching based upon identical, or closest, dimension variable(s), with the appropriate cutting protocols paths thereby being retrieved.

The optical scanner's measured dimension variables may preferably concern the disposition of the screen area within the front face of the FPD, so as to determine appropriate cutting paths directly from the FPD itself.

In the event of a null result, the characterisation parameter(s) or identifier(s) obtained may be used to populate a new database entry for that FPD.

Preferably the data processing system instigates the characterisation station to obtain further parameters and/or identifiers beyond those obtained when arriving at the null result. These may then be stored in said new database entry for that FPD.

So upon determination of an unknown FPD by the null result, the data processing system prompts the creation of a new cutting protocol for that unknown FPD. The new protocol may be created using scanned dimension and configuration information obtained from the optical scanner. The new cutting protocol may be provided at least in part by manual operator measurement and data entry. This is useful for unusually shaped or dimensioned FPDs, or one for which the scanner is ineffective.

The FPDs are usually provided with a visible unique identifier on an external surface of the FPD and the characterisation station comprises a visible identifier reader, comprising a camera or scanner.

The visible identifier reader obtains the unique identifier from the FPD and compares this with each entry of a pre-populated database of said identifiers.

The visible identifier may then be matched by the data processing system to an identity defined by the product brand and model number and the data processing system is adapted to log the identity of each end-of-life FPD processed so as to provide an audit of FPD brands and/or models processed over time by the apparatus. This allows FPD manufacturers to demonstrate compliance with recycling regulations and rules for removal of hazardous or recyclable components.

In yet a further aspect of the invention there is provided a process for disassembly of a flat panel display unit conducted using an apparatus according to the preceding description.

Following is a description, by way of example only, of modes for putting the present invention into effect, with reference to figures of the accompanying drawings in which:
Figure 1 is a front view of a typical backlit LCD TV set to be recycled in accordance with the present invention.
Figure 2 is a schematic transverse cross-sectional view through the LCD TV of figure 1 (not to scale).
Figure 3 is another schematic transverse cross-sectional view through an LCD monitor that is backlit using two CCFLs and a light guide plate.
Figure 4 is yet another schematic transverse cross-sectional view of a backlit LCD TV with an array of LED backlights.
Figure 5 shows the backlit LCD TV of figure 1 with the position of cutting lines projected onto the front face of the screen.
Figure 6 is a schematic transverse sectional view of the TV of figures 1 and 2, shown after cutting and removal of a screen sub-unit by the method of the present invention.
Figure 7 is a top view of apparatus used in carrying out the method of the present invention.
Figure 8 is a perspective view of the same apparatus.
Figure 9 is a perspective view of the apparatus located in an isolation cell or room.
Figure 10 is a flowchart of the processing steps involved in processing a backlit LCD TV displays.
Figure 11 is a schematic transverse cross-sectional view through a monitor LCD with backlighting provided by two CCFLs and a light guide plate, as shown in figure 3, with cutting directions indicated.
Figure 12 is a flow chart of the processing steps involved in processing LCD monitors of the type shown in figure 11.

The present invention facilitates the use of a fully robotic (automated) system to depollute FPDs. It permits the automatic characterisation of FPDs by weighing, measuring dimensions, reading visual identifiers. This data can be used to find a match for pre-loaded data of specific FPDs, or can be used to build-up a database of such data to allow subsequent automatic identification. The data may be used to select the appropriate processing technique for each individual type of FPD.

The process and apparatus of the present invention is described in the following with reference to processing of back-lit LCD screens, such as those back lit by CCFL tubes or LEDs. However, the invention has broad application to the processing of virtually any FPD. The 'processing' is typically a partial disassembly to remove or gain access to components such as screens or backlights or PCBs or power supplies that may be recycled, or may need further treatment as hazardous waste, or for extraction of valuable materials.

The process typically involves removing the visible screen by cutting it out of its frame. This allows access to any backlights behind the screen. These may be removed at the routing station with a robot to remove the lights and holders for the FPD. The waste glass/backlights from the routing may be compressed by shredded before it enters the storage bins. The process equipment is usually freestanding inside a controlled atmospheric environment, with the aid of filtration, such carbon filtration.

The FPD screens are typically removed (cut out) in downward facing position. For TVs, the optical scanner finds the screen bezel and then cuts 0-12mm into the screen side of the bezel to a depth of 0-20mm.

For the processing of LCD computer monitors the cut is a 'full liberation cut' to remove the entire border regions typically by cutting to a depth of 40 -100mm through the entire monitor depth. The cuts are made 0-100mm inward from the top of the FPD. The cuts in the screen are made using readily available blades with inserts designed for cutting and/or grinding depending on the process.

Efficient processing in accordance with the present invention involves having access to an accumulation of end-of-life FPDs, typically back-lit LCD TV sets, as described in more detail hereinafter. These may be provided as discrete batches sourced from a waste processing plant, or as a generally continuous stream when the apparatus is integrated into an electrical waste processing plant.

As a preliminary step each FPD unit may be characterised by measuring its weight and/or by using other identifying characteristics such as dimensions.

Preferably cuts are made into the screen of the FPD leaving a border of LCD screen left, like a picture frame, in the FPD. This differs from previous methods which typically cut around the LCD screen so as to leave it intact. Cutting within the perimeter of the screen facilitates the removal of the screen, as it is usually attached to the FPD screen in the edge regions. Hence in the present method the screen typically falls away from the FPD chassis after cutting.

In one embodiment of the method, after the FPD is brand and model identified by weight it is then picked-up from a datum corner position on the weigh station using a robot arm.

A 3D scanner may be used to log the dimensions, shape and screen position so as to inform the subsequent processing cuts or machining.

The cuts may be made so as to leave a border 3-20mm thick of the LCD (glass) screen in the FPD, in the manner of a picture frame. This avoids the need (in prior art processes) to cut into the surrounding support frame or housing of the FPD.

Once the screen has been cut and the inner portion removed the CCFL back lighting tubes may be removed by a tool, such as a router. Preferably this is done using a robot with sensing technology for controlling location and proximity to the back pane of the TV and the CCFL light tubes. The FPD may be held by the arm at an angle to the ground allowing for the collection of debris in a hopper. This could also be complete by a static tooling station.

The liberation of the CCFL tubes and tube holders is achieved using a mill like cutting tool designed for this purpose, such as a router.

The apparatus will typically use two robots, one equipped with a grasping tool for lifting and moving (translating) the FPD between weighing station and routing station where the CCFLs are removed. The apparatus can be scaled by increasing the number of FPD feed streams and robot arms.

Offcuts which still hold CCFL tubes or pieces may be further treated by shredding these offcuts along with the liberated CCFL tubes.

The cutting robot may be provided with (or have associated therewith) air nozzles which blow at the FPD while the cutting process in underway, so as to disperse the tube contents. The nozzles may be adjacent suction ducts for removing harmful gas or air-entrained particles arising from the cutting.

The collection of FPD as an end of life waste product means many of the FPDs are damaged and 3D scanning can identify damaged FPDs and take the damage into account, or invoke manual processing if the damage is too severe for an automated process to continue.

It may be necessary to manually identify and select the FPD type in advance of processing. This is important because monitors without back lighting may require a different process to backlit TVs, and may require different cutting tools and gripper tools.

The infeed conveyer feeds the FPD into the machine with the screen facing down. At the end of the conveyer it reaches the identification and weighing station where the FPD is lifted to assess weight and read for make and model of FPD. It is gripped in a screen down orientation by the grip end of a robot arm.

The FPD may be 3D scanned before the arm moves the FPD to the screen cutting station. The arm positions the FPD face down on the screen cutting station. The 3-D scanner reads high differences, housing size, and shape and allows for damage by comparing a damaged element with a template example stored in the data processing system.

Once picked-up, the end of the robot arm effector (grip) monitors the grip finger position to insure the FPD does not distort. In the event of unexpected distortion the grip may be adjusted or removed and re-applied to obtain a better grip. Since the screen is the lowest area on the viewing face (LCD screen) of the FPD, this is cut first by cutting blades (wheels) which project upwards. The two longitudinal (X) and transverse (Y) cuts leave a picture frame of about 0-15mm of screen within the FPD. The cuts extend to a depth of about 5-100mm, depending upon the particular FPD.

As the screen is face down (screen down) while being processed allowed for any debris to be captured by dropping down under gravity from the cutting location. Debris may be collected under the cutting station.

In the cutting station one blade may be in a fixed position and the other moveable in the width direction so as to alter the cutting span. A conveyor may be used to feed the FPD into the cutting wheels to produce parallel elongate cuts. The FPD is fed through the screen cutting station by the robot in the manner of a table saw with the short edge leading and once this is cut is complete the robot raises up and rotates the FPD though 90 degrees to cut the long side. The blades may have a fixed height so that they do not travel in the Z. direction.

The liberated screens fall into a chute underneath the screen cutting station and then slide onto the screen outfeed conveyor. Any broken tubes caused by the screen cutting at this stage will fall through a gap between the chute and the conveyor and be diverted to the lamp shredder.

The tube shredding is conducted in a conventional shredder placed over the tube bins. A robot router is used to break the lamps for compaction and easier transport. They are removed by the robot from the FPD using a routing tool on the robot arm.

The circular saw blades vary in size from about 150mm to 480mm diameter and RPM from 2500 to 10000. The blades may be adapted for cutting or grinding.

In the process the screens are liberated from the FPD in the screen cutting station while being held by the end effector of the robot. This allows access to backlights by the robot arm for further processing (to removed remnant CCFL tubes) if required. The screen is held at an angle of between about 10-80 degrees off vertical. The routing robot routes out the backlight and holders from the FPD using a cutting tool. If fitted with hot and/or cold air systems, these assist in the dispersal of the debris into suitable collectors. So the CCFL tubes or shreds fall into the hopper to be fed into the shredder to be broken into particles. The shredders feed storage bins/containers with a hermetic seal which allows them to be transported safely for disposal or recycling. This ensures that the mercury containing hazardous waste is separated from the other machining dust and waste generated within the process apparatus by the cutting/routing.

Data from the FPD processing is logged and may be stored on the data processing or kept in the cloud for ease of remote access. The data logs each recycling event and, so far as is possible, the make and model of each FPD that is processed. This facilitates the accounting for reprocessing of electrical goods required by regulatory regimes in which manufacturers of FPD screens are responsible for contributing for recycling costs, so recyclers will be reimbursed for their re-processing. So the data stored is accounted for on a per FPD/TV as well as recording the overall numbers on a holistic level.

The entire process may be carried out in clean room environment using a HVAC system in which ducts exhaust emissions to the environment through a specifically designed carbon filtration system.

The use of robots allows us to automate the process and minimize human intervention within the machine. The speed of the process varies with FPD size from about 15 to about 80 second per FPD. LED displays are processed quicker and backlit CCFL and monitors quicker are than TV's. The FPD size also has an impact on timing of processing speed. This is a two step fully robotic process. This is not a recycling process it is depollution process to enable the next step of material separation before the components are eventually recycled as secondary raw material. After the depollution the FPD is ready for further processing.

### Specific embodiment

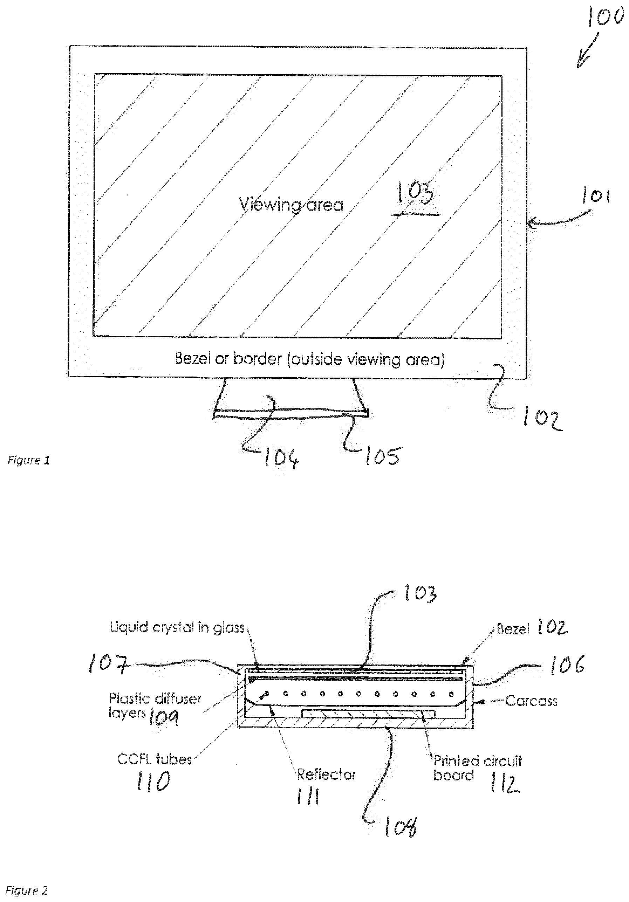

A first TV set is shown generally as 100 in figure 1. The TV set comprises a rectilinear housing 101 which forms a perimeter frame 102 around an LCD panel 103 which serves as the viewing screen. A lower end region of the housing is provided with a stand 104 which includes a horizontal base plate 105 which supports the TV set when in use.

In figure 2 sidewalls 106 and 107 and housing back 108 are shown. The LCD panel 103 sits behind the frame 102 and overlaps the underside regions of the frame. Under the LCD panel is a Perspex protective stratum/diffuser 109. Under the stratum is an array of generally cylindrical CCFL tubes 110 arranged parallel and extending longitudinally from side to side across the set. The tubes are accommodated in a metal reflector tray or back plate 111 at attached thereto by plastic retainers (not shown) Under the tray is a PCB layer 112 attached to an inside surface of the housing back 108.

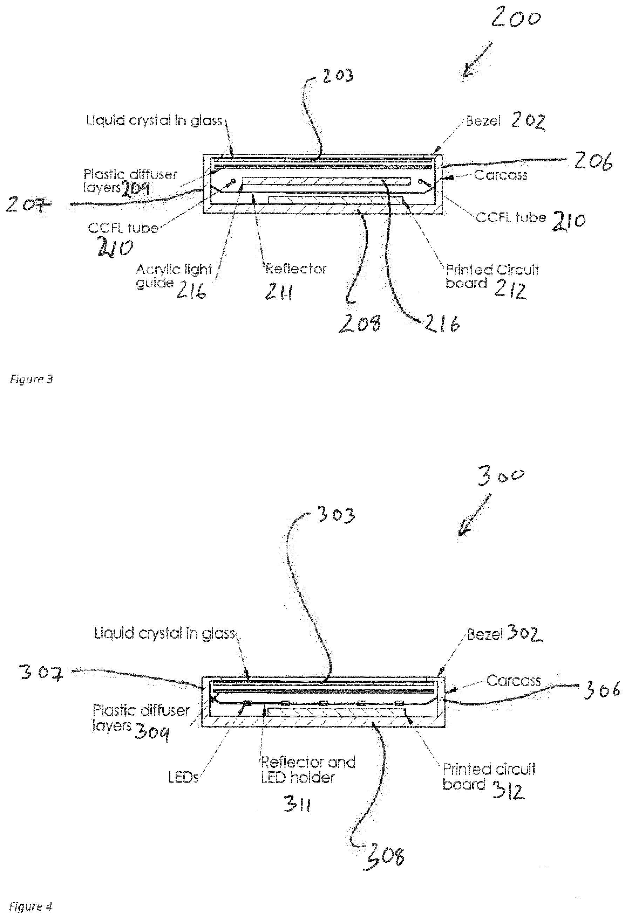

A backlit FPD monitor / laptop 200 arrangement is shown in figure 3, in which like elements are given corresponding numbering, but prefixed with a 2 rather than 1. Of note is that there are only two (somewhat larger) CCFL tubes 210 at spaced apart and parallel at opposite ends of the reflector tray 211. The tubes are located and held by plastic retainers (not shown). A Perspex plate 216 extends between the two spaced apart CCFL tubes 210 acts as a light guide/tube for electromagnetic radiation emitted from the tubes. The plate is provided with an upper surface treatment which guides light to emit upwards towards the diffuser and screen 203. This provides uniform illumination so as to provide indirect backlighting of the LCD panel from the CCFLs via the light guide.

In figure 4 and LCD FPD backlit using LEDs is shown generally as 300. As before, like feature are given like numbers, but in the 300 series. Instead of CCFL tubes, this FPD uses LEDs as the light source for backlighting.

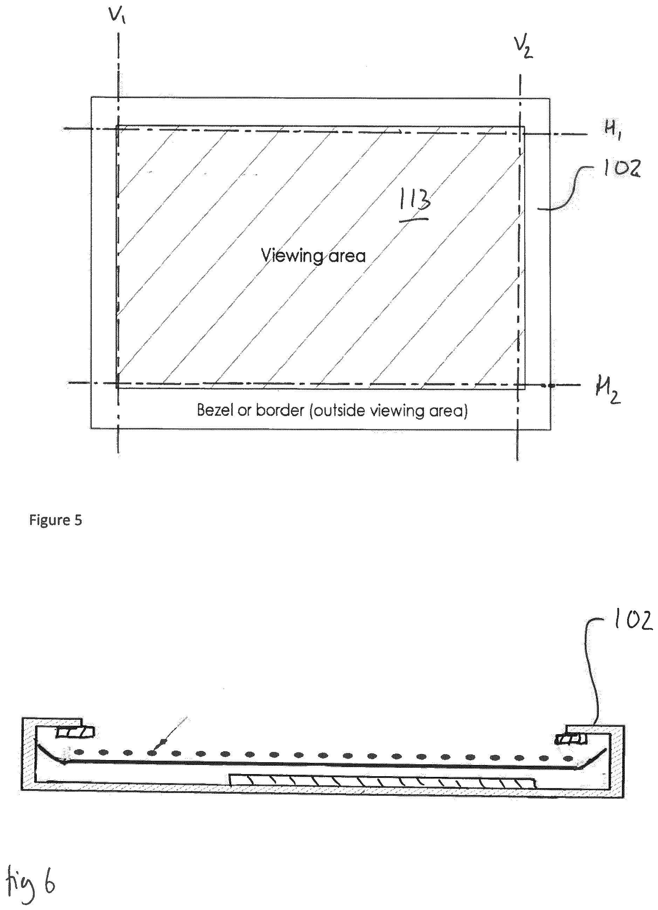

In figure 5 the FPD of figures 1 and 2 is shown with the location of cutting paths indicated by the parallel pairs of ghosted lines V1, V2 and H1, H2. The cutting paths define therewithin a sub-unit 113 of the LCD screen 103, which sub-unit is within the border or bezel 102 of the screen housing.

### Process and apparatus

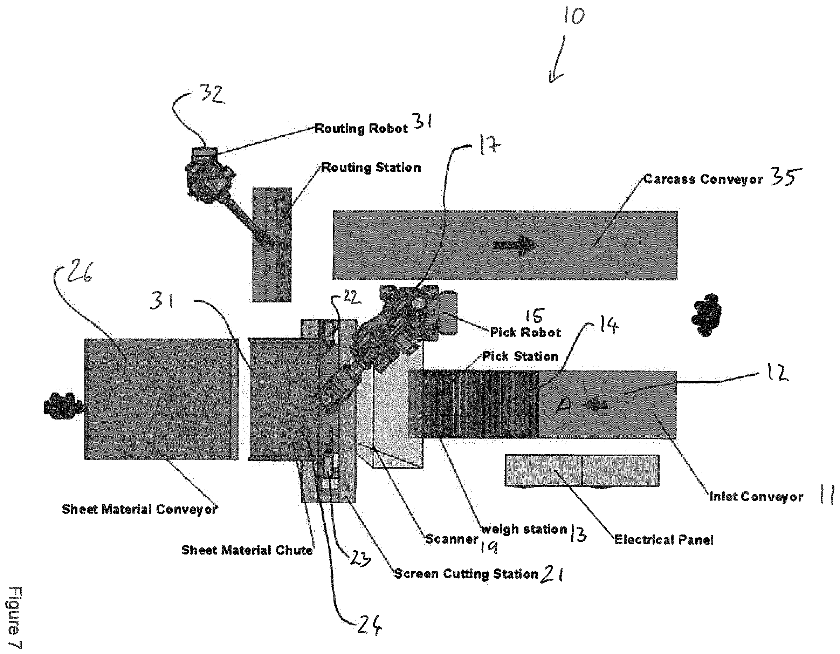

In a specific embodiment of the present invention a recycling apparatus for flat panel display units is shown generally as 10 in figure 7. As an initial step end of life backlit LCD TV sets or monitors are stripped of any appendages such as external cables and loose stands. The remaining FPD unit (such as those described above with reference to figures 1 to 4) is then manually loaded, screen panel down, and aligned square-on to an elongate inlet feed conveyor 11 comprising a moving conveyor belt 12 which transports the FPD in a longitudinal in feed direction of travel (arrow A).

The conveyor feeds to a weigh station 13 having a series of transverse weigh members 14. The FPD abuts a corner stop which corresponds to a weighing position. The weigh members are then shifted to project upwards to lift the FPD so that the weight is taken by the weigh members and can then be derived from associated pressure sensors/cells (not shown). The logged weight may be communicated to the control system 30, which comprises a data processing system and data storage for the system. The weight is compared to weights for known and characterised FPD units. The weight (+/an acceptable tolerance) may give a single FPD match, or a set of possible TVs/monitors/units which might be matches.

An optical scanner 19 is a 3-D scanner which is used to further characterise the FPD. So the set of possible FPDs can be reduced by using the scanner to measure one or more dimensions. If a match is made then pre-loaded processing data and parameters for that set may be invoked to facilitate the subsequent processing.

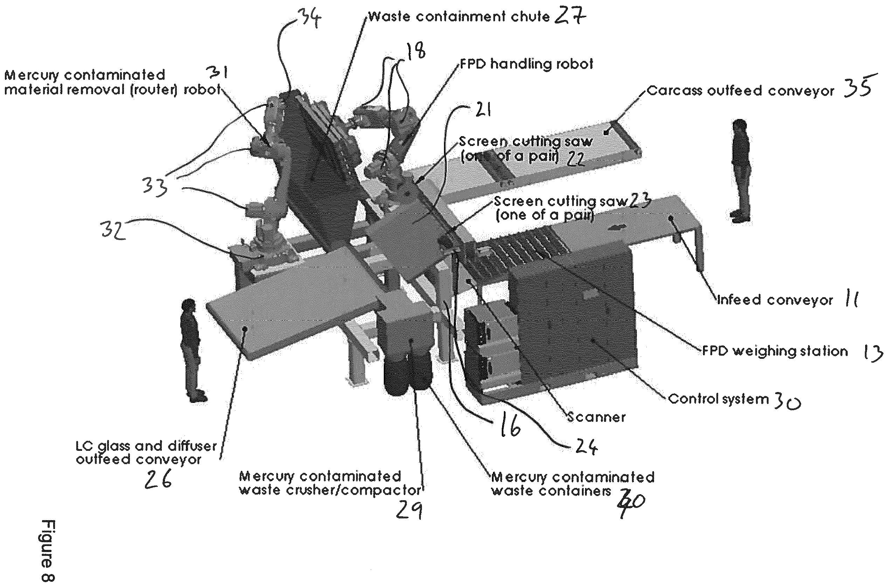

For example, in identifying a specific TV set, the weight information is communicated to a data processing system server (see control system 30 in figure 8) which includes a stored look-up table of TV sets/monitors by weight. If several candidates are identified the data processing system invokes a dimension measurement step, which is then carried out on the weighing station by using automated calipers or clamps which span the height and/or width of the TV to measure these. Alternatively the scanner may be used to derive dimension information. This then allows a further look up table of TV dimensions to be used to identify a candidate TV set. The pre-loaded processing data and parameters are used to guide the following cutting and routing operations, so that they may be automated according to predicted dimension and configuration data for each TV set.

If the set is not identified a manual process may be invoked with the TV brand and model being logged manually by an operator. The appropriate cutting and routing positions and extents are logged when carried out with the robot arms under manual control. This tool operation data is stored for use to allow automation of the processing of the 'new' TV set in the future, with the look-up tables updated appropriately to reflect the newly entered TV set/monitor. The weight value and a sequential identifier code for the FPD are sent to a data processing server in the control system 30 and stored.

Alternatively an automatic FPD characterisation step may be invoked in which the scanner is used to identify the display screen and its visible area, and its disposition with respect to housing edges or corners. From this a new cutting protocol may be derived. This may be translated into a series of instructions for the robot arm, turntable and the cutting tools.

An FPD handling robot arm 15 is provided attached to a frame 16 located adjacent the weigh station end, as shown in the figure 8. The robot arm 15 is provided with a turntable base 17 and various articulated joints 18, and a gripper claw 31 for picking up a free corner region of the FPD. The robot is pre-programmed to approach the free corner and apply controlled pressure so as to grip but not crush the FPD free corner. The arm then sweeps the FPD past the optical scanner 19. The scanner measures screen panel height and width, and location with respect to any perimeter frame or bezel of the FPD housing. The data processing system stores the dimension data necessary to be able to isolate the screen panel's location and extent with respect to the gripper position. Should the scanned data not correlate with the pre-loaded data it may be assumed that the FPD is damaged, and it is therefore rejected from further processing by the apparatus and sent for manual processing.

The gripper may include pressure sensors. Should a sudden reduction in pressure be felt, corresponding to mechanical compromise or crushing of the FPD, then the FPD is rejected from further processing and placed by the robot arm onto an outfeed conveyor 20. An alert signal is generated by the data processing system so as to prompt the intervention of an operator who will decide how best to treat the FPD by alternative measures (such as manual disassembly).

Having established the screen size, weight and location on the FPD front surface, the robot arm transports the FPD to a cutting station 21. The cutting station has first and second spaced apart rotary cutting saws 22,23. The first and second saws are aligned coaxially and define therebetween a cutting spacing and parallel cutting lines. The second saw 23 is mounted on a traveller 24 so that the saw separation may be varied by travel towards or apart from the first saw blade 22. The data processing system selects a cutting separation corresponding to the desired cutting width or height dimension of the screen panel, or a short distance under this.

The FDP unit is placed face down on the cutting table 25 which is mounted on the frame at an angle of greater than zero and less than 45 (about 30 degrees) from the horizontal. The cut is made by the robot arm translating the screen in a cutting direction, over the cutting saws from one edge region of the FPD unit to the opposite side. The cut depth is usually set to cut through the screen panel thickness and plastic diffuser sheet/films, but not so deep as to shatter the CCFL tubes (if present) behind the screen panel. Once a first cut has been made the FPD is rotated 90 degrees by the robot arm and a second pair of cuts are made, perpendicular in direction with respect to the first cuts. In this way a unitary rectangular cut-out sub-unit 113 (figure 5) of screen panel 103 is produced. Having made the cuts, the robot arm lifts the FPD unit from the table 25, leaving behind a cut-out rectangular glass screen panel and plastic diffuser panel and or protective sheeting/films (underlying the screen) on the table. The slope allows the cut-out panel (and any attached diffuser panel or films) to slide away down onto an outfeed conveyor 26, shown in figure 7. The glass panel is then subject to further processing (not shown), and recycling elsewhere.

In the event that CCFL tubes are present the first robot arm is instructed to move the FDP chassis unit to a position above a hopper 27 located to one side of the cutting table and out feed conveyor, as shown in figure 8. The hopper feeds into a shredding rotor (not visible) which in turn feeds (via an Archimedes screw) into a waste crusher/compactor/shredder 29. The compactor includes collection bins 40 which are removable for safe disposal or further treatment.

A second robot arm 31 is provided on an opposite side of the hopper. The arm has a turntable base 32 and articulated joints 33. A distal end of the arm is provided with a router tool 34. The router tool is then directed by the control system to move in inside the cut-out aperture left by the removed screen panel so as to shatter CCFL tubes and displace any associated retaining mounts and tube ends. The FPD unit is angled so as to present the cut-out aperture to the second robot arm router, but also to ensure that routed pieces of the CCFL and retainers etc. fall down into the hopper under gravity. The CCFL pieces will typically be contaminated with mercury and phosphate and are therefore further crushed and compacted, and then collected in the bins 40 (UN certified contaminant containers) which may be hermetically sealed for transport, decontamination or further treatment.

The remaining FPD unit carcass - comprising housing, PCBs/electrical components and internal chassis frame is (after the routing is complete) placed flat onto a carcass outfeed conveyor 35 which is positioned to have one end adjacent the base of the first robot arm and the opposite end adjacent, but spaced apart from, the infeed conveyor. In this way a single person may deal with manual FPD unit feeding-in and collecting out-fed FPD chassis due to the proximity of conveyors.

Once the chassis is placed on the outfeed conveyor, the data processing system is configured to alert an operative of the FPD type and status, so that it is removed to the appropriate location for any further processing or disassembly.

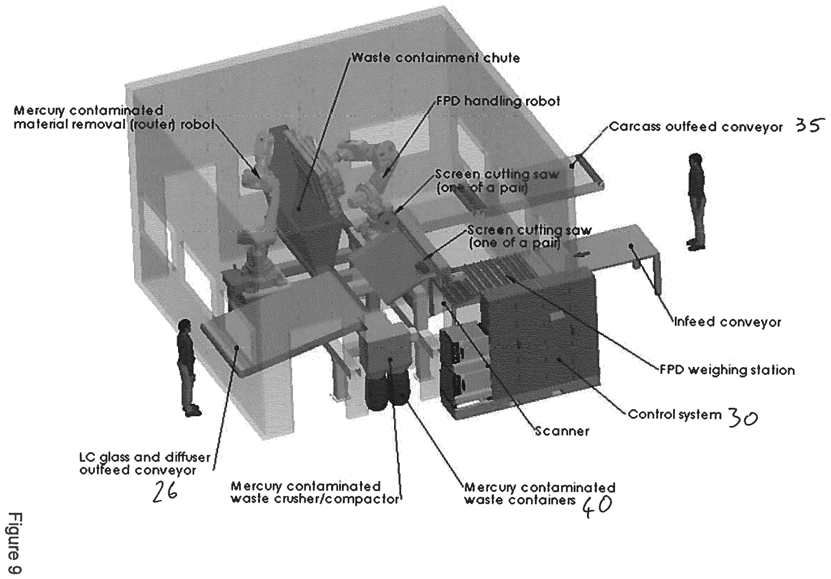

The apparatus is typically disposed within a 'clean room' or other containment enclosure within a larger work space, as shown in figure 9. The infeed conveyor 11, collection bins 40 and outfeed conveyors 26,35 are disposed so as to be accessible from outside the enclosure, via curtained apertures.

In normal use there would be no reason for a person to enter the processing area inside the enclosure, so reducing the risk of mercury contamination and hazard from cutting or routing dust. As an additional measure, forced extraction of air from the enclosure takes place via a filtration system (not shown) so as to prevent escape of mercury to the atmosphere outside the enclosure.

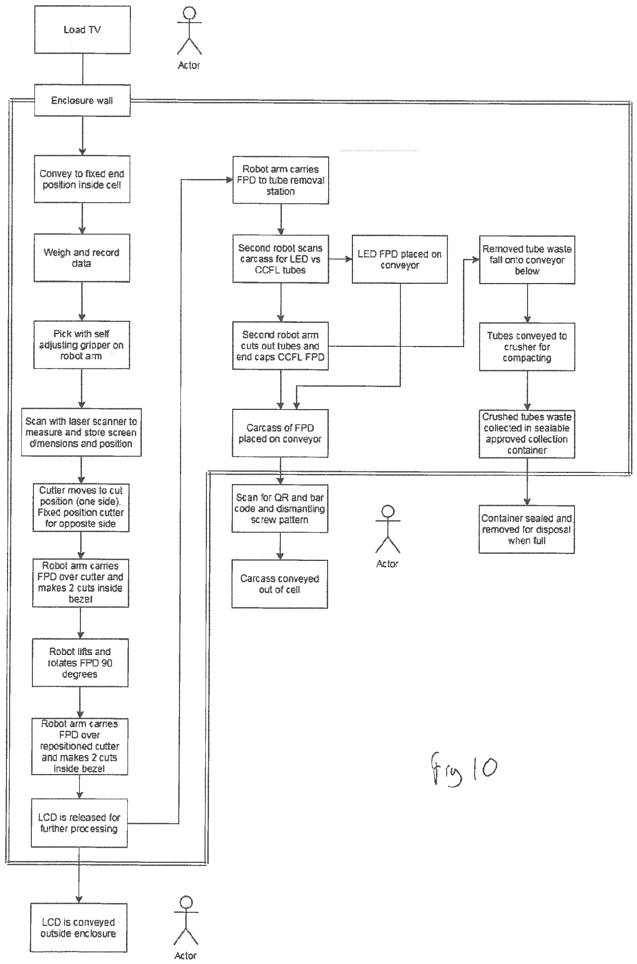

The above method is particularly appropriate for CCFL backlit FPD TV sets. It can also be used to process LCD FPD TV sets which are backlit by LEDs. The process is summarised in the flow chart shown in figure 10.

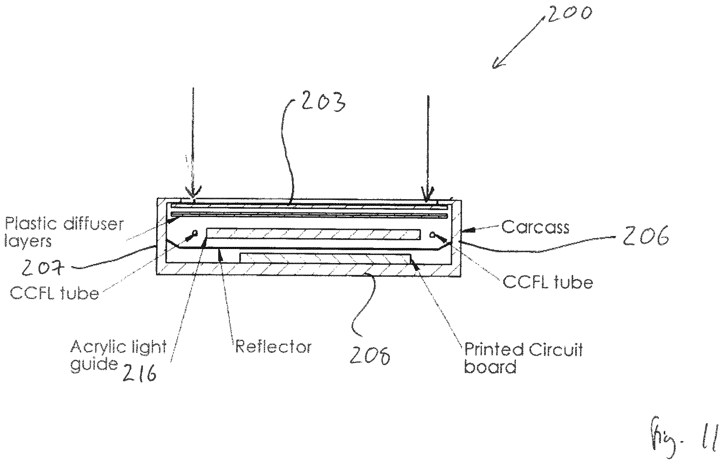

For computer monitors with backlit LCD screens 203 the internal arrangement often relies upon indirect illumination using a light guide panel 216, as shown in figure 3. In this case, rather than cutting out a portion of the LCD screen panel (as described above), the end regions containing the CCFL tubes can be completely cut off using one pair of parallel cuts C1, C2 in figure 11. The CFFL tubes inside the cut-off edge regions will be intact if the cut is positioned appropriately. These end regions can then be conveyed out of the enclosure for further treatment. Alternatively they can be placed into the shredding hopper and the FPD carcass/chassis with remaining central screen portion placed on the outfeed conveyor 35.

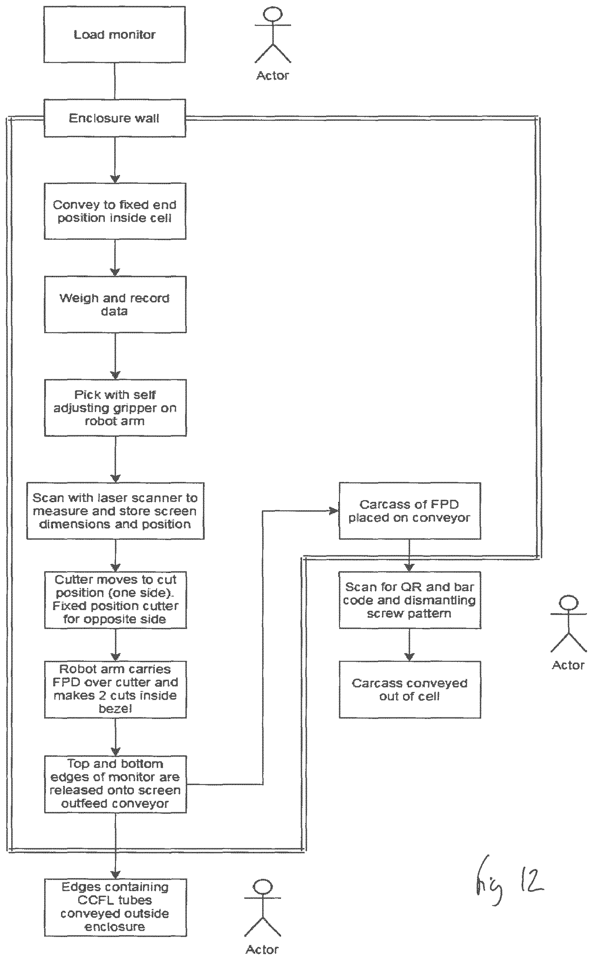

The above monitor processing method is summarised in the flow chart figure 12.

## Claims

1. Apparatus for the disassembly of flat panel display units wherein each flat panel display, FPD, comprises a display screen provided on the front face of the FPD and a housing which accommodates the screen and associated electronic circuitry, the apparatus comprising:
(i) a cutting station for receiving an end-of-life FPD, the cutting station being configured and arranged to make cuts into the FPD along cutting paths which permit detachment of the entire display screen, or a cut-out sub-unit of the display screen, from the FPD,
(ii) an FPD characterisation station provided in advance of, or at, the cutting station, the characterisation station being adapted to measure and/or log one or more characterising parameters or identifiers of the FPD in advance of the cutting step,
(iii) a data processing system in data communication with the FPD characterisation station, the data processing system being adapted to receive one or more of said characterising parameters or identifiers, and attempt to derive therefrom an appropriate protocol for cutting the FPD display screen, and provide instructions in accordance with the protocol which are sent back to the cutting station so as to control the cuts,
**characterised in that** the characterisation station comprises a weigh station adapted to weigh the FPD so as to obtain a measured weight value for the FPD, which value serves as one characterising parameter.

2. Apparatus as claimed in claim 1 wherein the weight value is sent to the data processing system, the measured FPD weight value being compared with an associated FPD database which comprises known FPD weights so as to obtain one or more candidate FPD matches based upon identical weight, or closest weight, thereby determining the appropriate cutting protocol for the screen cutting.

3. Apparatus as claimed in claim 2 wherein the FPD database is pre-loaded with cutting path instructions for a range of known FPDs, and
wherein the FPD database further comprises one or more stored characterising parameters or identifiers of each of the known FPDs.

4. Apparatus as claimed in in claim 3 wherein the data processing system is adapted to compare one or more characterisation parameter or identifier obtained from the characterisation station for a characterised FPD with one or more counterpart characterisation parameter or identifier stored in the database so as to identify a matching stored FPD or in the absence of this a null result.

5. Apparatus as claimed in claim 4 wherein in the event of a match, the data processing retrieves the appropriate protocol for cutting that FPD display screen and sends instructions in accordance with the protocol to the cutting station.

6. Apparatus as claimed in any of the preceding claims wherein the FPD characterisation station comprises an optical scanner, and preferably a 3-D scanner.

7. Apparatus as claimed in claim 6 wherein the optical scanner is adapted to measure one or more dimensional variable of the FPD.

8. Apparatus as claimed in claim 7 where in the dimensional variable comprises one or more of: FPD housing width and/or length and/or diagonal extent, visible display screen width and/or length, and/or diagonal extent.

9. Apparatus as claimed in claim 7 or 8 wherein the dimensional variable or variables is/are compared to corresponding known FPD dimension variables provided in the database, so as to permit matching based upon identical, or closest, dimension variable(s), with the appropriate cutting protocols paths thereby being retrieved.

10. Apparatus as claimed in claim 9 wherein the optical scanner's measured dimension variables concern the disposition of the screen area within the front face of the FPD, so as to determine appropriate cutting paths directly from the FPD itself.

11. Apparatus as claimed in any of the preceding claims wherein in the event of a null result, the characterisation parameter(s) or identifier(s) obtained are used to populate a new database entry for that FPD.

12. Apparatus as claimed in claim 11 wherein the data processing system instigates the characterisation station to obtain further parameters and/or identifiers beyond those obtained when arriving at the null result, and wherein these are stored in said new database entry for that FPD.

13. Apparatus as claimed in claim 11 wherein upon determination of an unknown FPD by the null result, the data processing system prompts the creation of a new cutting protocol for that unknown FPD.

14. Apparatus as claimed in claim 13 wherein the new protocol is created using scanned dimension and configuration information obtained from the optical scanner.

15. Apparatus as claimed in claim 13 or 14 wherein the new cutting protocol is provided at least in part by manual operator measurement and data entry.

16. Apparatus as claimed in any of the preceding claims wherein the FPD is provided with a visible unique identifier on an external surface of the FPD and the characterisation station comprises a visible identifier reader comprising a camera or scanner.

17. Apparatus as claimed in claim 16 wherein the visible identifier reader obtains the unique identifier from the FPD and compares this with each entry of a pre-populated database of said identifiers.

18. Apparatus as claimed in claim 16 or 17 wherein the visible identifier is matched to an identity defined by the product brand and model number and wherein the data processing system is adapted to log the identity of each end-of-life FPD processed so as to provide an audit of FPD brands and/or models processed over time by the apparatus.

19. A process for disassembly of a flat panel display unit conducted using an apparatus in accordance with any of the preceding claims.

## Patentansprüche

1. Vorrichtung zur Zerlegung von Flachbildschirmeinheiten, wobei jede Flachbildschirmeinheit, FPD, einen auf der Frontseite der FPD bereitgestellten Bildschirm und ein Gehäuse, das den Bildschirm und zugehörige elektronische Schaltungsbauteile umschließt, umfasst, wobei die Vorrichtung Folgendes umfasst:
(i) eine Schneidestation zum Aufnehmen einer am Lebensdauerende befindlichen FPD, wobei die Schneidestation dazu konfiguriert und angeordnet ist, Schnitte in der FPD entlang Schnittlinien, die eine Abtrennung des gesamten Bildschirms oder einer ausgeschnittenen Untereinheit des Bildschirms von der FPD erlauben, herzustellen,
(ii) eine FPD-Kennzeichnungsstation, die vor oder an der Schneidestation bereitgestellt ist, wobei die Kennzeichnungsstation dazu ausgelegt ist, einen oder mehrere kennzeichnende Parameter oder Bezeichner der FPD vor dem Schneideschritt zu messen und/oder zu protokollieren,
(iii) ein Datenverarbeitungssystem in Datenkommunikation mit der FPD-Kennzeichnungsstation, wobei das Datenverarbeitungssystem dazu ausgelegt ist, einen oder mehrere der kennzeichnenden Parameter oder Bezeichner zu empfangen und zu versuchen, davon ein zweckmäßiges Protokoll zum Schneiden des FPD-Bildschirms abzuleiten, und Anweisungen gemäß dem Protokoll bereitzustellen, die an die Schneidestation zurückgesendet werden, um die Schnitte zu steuern,
**dadurch gekennzeichnet, dass** die Kennzeichnungsstation eine Wiegestation umfasst, die dazu ausgelegt ist, die FPD zu wiegen, um einen gemessenen Gewichtswert für die FPD zu erhalten, wobei dieser Wert als ein kennzeichnender Parameter dient.

2. Vorrichtung nach Anspruch 1, wobei der Gewichtswert an das Datenverarbeitungssystem gesendet wird, wobei der gemessene FPD-Gewichtswert mit einer zugehörigen FPD-Datenbank, die bekannte FPD-Gewichte umfasst, abgeglichen wird, um eine oder mehrere in Frage kommende FPD-Übereinstimmungen auf der Basis eines gleichen Gewichts oder eines am nächsten liegenden Gewichts zu erhalten, wodurch das zweckmäßige Schneideprotokoll für das Schneiden des Bildschirms bestimmt wird.

3. Vorrichtung nach Anspruch 2, wobei Schnittlinienanweisungen für einen Bereich bekannter FPDs vorher in die FPD-Datenbank geladen worden sind und
wobei die FPD-Datenbank ferner einen oder mehrere gespeicherte kennzeichnende Parameter oder Bezeichner jeder der bekannten FPDs umfasst.

4. Vorrichtung nach Anspruch 3, wobei das Datenverarbeitungssystem dazu ausgelegt ist, einen oder mehrere von der Kennzeichnungsstation erhaltene Kennzeichnungsparameter oder -bezeichner für eine gekennzeichnete FPD mit einem oder mehreren entsprechenden, in der Datenbank gespeicherten Kennzeichnungsparametern oder -bezeichnern abzugleichen, um eine übereinstimmende, gespeicherte FPD oder bei deren Nichtvorhandensein ein Nullergebnis zu identifizieren.

5. Vorrichtung nach Anspruch 4, wobei bei der Datenverarbeitung im Fall einer Übereinstimmung das zweckmäßige Protokoll zum Schneiden dieses FPD-Bildschirms abgerufen wird und Anweisungen gemäß dem Protokoll an die Schneidestation gesendet werden.

6. Vorrichtung nach einem der vorhergehenden Ansprüche, wobei die FPD-Kennzeichnungsstation einen optischen Scanner und vorzugsweise einen 3D-Scanner umfasst.

7. Vorrichtung nach Anspruch 6, wobei der optische Scanner dazu ausgelegt ist, eine oder mehrere Abmessungsvariablen der FPD zu messen.

8. Vorrichtung nach Anspruch 7, wobei die Abmessungsvariable eines oder mehrere von Folgendem umfasst: Breite und/oder Länge und/oder Diagonale eines FPD-Gehäuses, Breite und/oder Länge und/oder Diagonale eines sichtbaren Bildschirms.

9. Vorrichtung nach Anspruch 7 oder 8, wobei die Abmessungsvariable oder -variablen mit korrespondierenden bekannten, in der Datenbank bereitgestellten FPD-Abmessungsvariablen abgeglichen wird/werden, um eine Zuordnung auf der Basis einer oder mehrerer gleicher oder am nächsten liegender Abmessungsvariablen zu erlauben, wodurch die zweckmäßigen Schneideprotokolllinien abgerufen werden.

10. Vorrichtung nach Anspruch 9, wobei die gemessenen Abmessungsvariablen des optischen Scanners die Platzierung der Bildschirmfläche innerhalb der Frontseite der FPD, um zweckmäßige Schnittlinien direkt aus der FPD selbst zu bestimmen, betreffen.

11. Vorrichtung nach einem der vorhergehenden Ansprüche, wobei der eine oder die mehreren erhaltenen Kennzeichnungsparameter oder -bezeichner im Fall eines Nullergebnisses genutzt werden, um einen neuen Datenbankeintrag für diese FPD zu befüllen.

12. Vorrichtung nach Anspruch 11, wobei das Datenverarbeitungssystem auslöst, dass die Kennzeichnungsstation weitere Parameter und/oder Bezeichner zusätzlich zu denjenigen erhält, die erhalten werden, wenn zu dem Nullergebnis gelangt wird, und wobei diese in dem neuen Datenbankeintrag für diese FPD gespeichert werden.

13. Vorrichtung nach Anspruch 11, wobei das Datenverarbeitungssystem nach einer Bestimmung einer unbekannten FPD durch das Nullergebnis zur Erzeugung eines neuen Schneideprotokolls für diese unbekannte FPD auffordert.

14. Vorrichtung nach Anspruch 13, wobei das neue Protokoll unter Nutzung gescannter, vom optischen Scanner erhaltener Abmessungs- und Konfigurationsinformationen erzeugt wird.

15. Vorrichtung nach Anspruch 13 oder 14, wobei das neue Schneideprotokoll mindestens zum Teil durch eine manuelle Bedienermessung und einen Dateneintrag bereitgestellt wird.

16. Vorrichtung nach einem der vorhergehenden Ansprüche, wobei die FPD mit einem sichtbaren eindeutigen Bezeichner auf einer Außenoberfläche der FPD versehen ist und die Kennzeichnungsstation einen Leser sichtbarer Bezeichner umfasst, der eine Kamera oder einen Scanner umfasst.

17. Vorrichtung nach Anspruch 16, wobei der Leser sichtbarer Bezeichner den eindeutigen Bezeichner von der FPD erhält und diesen mit jedem Eintrag einer zuvor befüllten Datenbank der Bezeichner abgleicht.

18. Vorrichtung nach Anspruch 16 oder 17, wobei der sichtbare Bezeichner einer von der Produktmarke und Modellnummer definierten Kennung zugeordnet ist und wobei das Datenverarbeitungssystem dazu ausgelegt ist, die Kennung jeder am Lebensdauerende befindlichen, verarbeiteten FPD zu protokollieren, um ein Audit von im Zeitablauf durch die Vorrichtung verarbeiteten FPD-Marken und/oder -Modellen bereitzustellen.

19. Prozess zur Zerlegung einer Flachbildschirmeinheit, der unter Nutzung einer Vorrichtung nach einem der vorhergehenden Ansprüche durchgeführt wird.

## Revendications

1. Appareil pour le démontage d'unités d'affichage à écran plat, chaque unité d'affichage à écran plat, FPD, comprenant un écran d'affichage situé sur la face avant de la FPD et un boîtier qui reçoit l'écran et la circuiterie électronique associée, l'appareil comprenant :
(i) un poste de découpe pour recevoir une FPD en fin de vie, le poste de découpe étant configuré et agencé pour effectuer des découpes dans la FPD le long de trajectoires de découpe qui permettent de détacher de la FPD l'écran d'affichage entier ou une sous-unité découpée de l'écran d'affichage,
(ii) un poste de caractérisation de FPD installé avant le poste de découpe ou au niveau de celui-ci, le poste de caractérisation étant conçu pour mesurer et/ou consigner un ou plusieurs paramètres ou identifiants de caractérisation de la FPD avant l'étape de découpe,
(iii) un système de traitement de données en communication de données avec le poste de caractérisation de FPD, le système de traitement de données étant conçu pour recevoir un ou plusieurs desdits paramètres ou identifiants de caractérisation et pour tenter d'en déduire un protocole approprié pour la découpe de l'écran d'affichage de FPD, et pour fournir, selon le protocole, des instructions qui sont renvoyées au poste de découpe de manière à contrôler les découpes,
l'appareil étant **caractérisé en ce que** le poste de caractérisation comprend un poste de pesage conçu pour peser la FPD afin d'obtenir une valeur de poids mesurée pour la FPD, ladite valeur servant de paramètre de caractérisation.

2. Appareil selon la revendication 1, dans lequel la valeur de poids est envoyée au système de traitement de données, la valeur de poids mesurée de FPD étant comparée à une base de données de FPD associée qui comprend des poids connus de FPD afin d'obtenir une ou plusieurs correspondances de FPD candidates sur la base d'un poids identique ou d'un poids le plus proche, de manière à déterminer le protocole de découpe approprié pour la découpe de l'écran.

3. Appareil selon la revendication 2, dans lequel la base de données de FPD est préchargée avec des instructions de trajectoire de découpe pour une gamme de FPD connues, et dans lequel la base de données de FPD comprend en outre un ou plusieurs paramètres ou identifiants de caractérisation stockés de chacune des FPD connues.

4. Appareil selon la revendication 3, dans lequel le système de traitement de données est conçu pour comparer un ou plusieurs paramètres ou identifiants de caractérisation obtenus auprès du poste de caractérisation pour une FPD **caractérisée** à un ou plusieurs paramètres ou identifiants de caractérisation homologues stockés dans la base de données afin d'identifier une FPD stockée correspondante ou, en l'absence d'un tel résultat, un résultat nul.

5. Appareil selon la revendication 4, dans lequel, en cas de correspondance, le traitement de données récupère le protocole approprié pour découper l'écran d'affichage de FPD et envoie au poste de découpe des instructions selon le protocole.

6. Appareil selon l'une quelconque des revendications précédentes, dans lequel le poste de caractérisation de FPD comprend un scanner optique et, de préférence, un scanner 3D.

7. Appareil selon la revendication 6, dans lequel le scanner optique est conçu pour mesurer une ou plusieurs variables dimensionnelles de la FPD.

8. Appareil selon la revendication 7, dans lequel la variable dimensionnelle comprend un ou plusieurs des éléments suivants : une largeur et/ou une longueur et/ou une diagonale du boîtier de FPD, une largeur et/ou une longueur et/ou une diagonale de l'écran d'affichage visible.

9. Appareil selon la revendication 7 ou 8, dans lequel la ou les variables dimensionnelles sont comparées à des variables dimensionnelles FPD connues correspondantes fournies dans la base de données, de manière à permettre une correspondance sur la base d'une ou plusieurs variables dimensionnelles identiques ou les plus proches, les chemins de protocoles de découpe appropriés étant ainsi récupérés.

10. Appareil selon la revendication 9, dans lequel les variables dimensionnelles mesurées par le scanner optique concernent la disposition de la zone de l'écran à l'intérieur de la face avant de la FPD, de manière à déterminer des trajectoires de découpe appropriées directement à partir de la FPD elle-même.

11. Appareil selon l'une quelconque des revendications précédentes, dans lequel, en cas de résultat nul, le ou les paramètres ou identifiants de caractérisation obtenus sont utilisés pour remplir une nouvelle entrée de base de données pour cette FPD.

12. Appareil selon la revendication 11, dans lequel le système de traitement de données demande au poste de caractérisation d'obtenir d'autres paramètres et/ou identifiants que ceux obtenus lors de l'obtention du résultat nul, ceux-ci étant stockés dans ladite nouvelle entrée de base de données pour cette FPD.

13. Appareil selon la revendication 11, dans lequel, lors de la détermination d'une FPD inconnue par le résultat nul, le système de traitement de données demande la création d'un nouveau protocole de découpe pour cette FPD inconnue.

14. Appareil selon la revendication 13, dans lequel le nouveau protocole est créé au moyen d'une dimension et d'informations de configuration scannées, obtenues auprès du scanner optique.

15. Appareil selon la revendication 13 ou 14, dans lequel le nouveau protocole de découpe est fourni au moins en partie par une mesure et une entrée de données manuelles d'opérateur.

16. Appareil selon l'une quelconque des revendications précédentes, dans lequel la FPD est pourvue d'un identifiant unique visible sur une surface externe de la FPD et le poste de caractérisation comprend un lecteur d'identifiant visible comprenant une caméra ou un scanner.

17. Appareil selon la revendication 16, dans lequel le lecteur d'identifiant visible obtient l'identifiant unique auprès de la FPD et le compare à chaque entrée d'une base de données préremplie desdits identifiants.

18. Appareil selon la revendication 16 ou 17, dans lequel l'identifiant visible est mis en correspondance avec une identité définie par la marque de produit et le numéro de modèle, et dans lequel le système de traitement de données est conçu pour consigner l'identité de chaque FPD en fin de vie traitée de manière à fournir un audit des marques et/ou modèles de FPD traités au fil du temps par l'appareil.

19. Procédé de démontage d'une unité d'affichage à écran plat, réalisé au moyen d'un appareil selon l'une quelconque des revendications précédentes.
